# EUROPÄISCHE PATENTANMELDUNG

(11) **EP 1 101 970 A2**
(43) Veröffentlichungstag der Anmeldung: **23.05.2001**
(21) Anmeldenummer: 00122209.0
(22) Anmeldetag: 16.10.2000
(51) Int. Cl.: F16D 48/08, F16D 48/06

(54) **Verfahren und Vorrichtung zur Steuerung einer automatisierten Kupplung**

(30) Priorität: 20.11.1999 DE 19956305
(71) Anmelder: Volkswagen Aktiengesellschaft, 38436 Wolfsburg (DE)
(72) Erfinder: Hinrichsen, Uwe, Dr., 38124 Braunschweig (DE); Bothe, Edgar, Dipl.-Ing., 31224 Peine (DE)

(57) **Zusammenfassung**

Ein Verfahren zur Steuerung einer automatisierten Kupplung, insbesondere eines Kraftfahrzeuges, bei niedrigen Fahrgeschwindigkeiten sieht vor, daß bei einem Anfahrvorgang unabhängig voneinander ein Kriechmoment und ein Anfahrmoment ermittelt wird, und daß dann ein Kupplungssollmoment als Funktion des Kriechmomentes und des Anfahrmomentes bestimmt und an der Kupplung (7) eingestellt wird.

Ein alternatives Verfahren zur Steuerung einer automatisierten Kupplung bei niedrigen Fahrgeschwindigkeiten sieht vor, daß bei einem Anfahrvorgang weiterhin ein Kriechmoment ermittelt wird, und daß dann ein Anfahrmoment als Funktion des Kriechmomentes bestimmt und an der Kupplung (7) eingestellt wird.

Entsprechend weist eine Vorrichtung zur Steuerung einer automatisierten Kupplung, insbesondere eines Kraftfahrzeuges, bei niedrigen Fahrgeschwindigkeiten einen Kriechregler (3) zur Ermittlung eines Kriechmomentes und ein Anfahrregler (4) zur Ermittlung eines Anfahrmomentes auf. Desweiteren ist eine mit dem Kriechregler (3) und dem Anfahrregler (4) in Verbindung stehende Auswerteeinheit (5) zur Bestimmung eines Kupplungssollmomentes als Funktion des Kriechmomentes und des Anfahrmomentes vorgesehen.

In einer alternativen Anordnung weist eine Vorrichtung zur Steuerung einer automatisierten Kupplung bei niedrigen Fahrgeschwindigkeiten einen Kriechregler zur Ermittlung eines Kriechmomentes und einen mit dem Kriechregler in Verbindung stehenden Anfahrregler zur Bestimmung eines Anfahrmomentes als Funktion des Kriechmomentes auf.

## Beschreibung

Die Erfindung betrifft ein Verfahren zur Steuerung einer automatisierten Kupplung, insbesondere eines Kraftfahrzeuges, bei niedrigen Fahrgeschwindigkeiten.

Die Erfindung betrifft weiterhin eine Vorrichtung zur Steuerung einer automatisierten Kupplung bei niedrigen Fahrgeschwindigkeiten.

In Kraftfahrzeugen mit automatisierter Kupplung wird in der Regel zwischen den Fahrzuständen "Kriechen" und "Anfahren" unterschieden. Im Fahrzustand "Kriechen", der zumeist bei eingelegter Fahrstufe und bei nicht betätigtem Fahrpedal aktiviert ist, wird durch einen Kriechregler ein der Fahrsituation entsprechendes Drehmoment, das sogenannte Kriechmoment, ermittelt und mittels einer zugeordneten Stellvorrichtung in der Kupplung eingestellt. Das Kriechmoment ist dann entsprechend den Übersetzungsverhältnissen einer eingelegten Fahrstufe und eines Ausgleichsgetriebes gewandelt auf die Antriebsräder wirksam. Das Kriechmoment soll bei einer ebenen Fahrbahn und bei geringer Steigung bzw. geringem Gefälle ein Zurückrollen des Kraftfahrzeuges, worunter ein Rollen in die falsche Richtung, d.h. ein Rückwärtsrollen bei eingelegter Vorwärtsfahrstufe und ein Vorwärtsrollen bei eingelegter Rückwärtsfahrstufe zu verstehen ist, verhindern. Fahrmanöver mit geringer Geschwindigkeit, wie z.B. ein Ein- und Ausparken des Kraftfahrzeuges, sind dabei durch einen Fahrer in komfortabler Weise alleine über eine mehr oder weniger starke Betätigung eines Bremspedales steuerbar. Im Fahrzustand "Anfahren", der bei einer eingelegten Fahrstufe, Fahrzeugstillstand oder geringer Fahrgeschwindigkeit und betätigtem Fahrpedal aktiviert ist, wird durch einen Anfahrregler ein in der Regel größeres Drehmoment, das sogenannte Anfahrmoment, ermittelt und über die Stellvorrichtung in der Kupplung eingestellt. Das Anfahrmoment ist derart bemessen, daß das Kraftfahrzeug aus dem Stillstand oder aus einer geringen Fahrgeschwindigkeit heraus in Abhängigkeit von der Betätigung des Fahrpedales entsprechend der eingelegten Fahrstufe in Vorwärts- oder Rückwärtsrichtung beschleunigt wird. Dabei erfolgt eine Steuerung des Überganges zwischen den Fahrzuständen "Kriechen" und "Anfahren" nach dem Stand der Technik in Abhängigkeit verschiedener Kriterien, beispielsweise in Abhängigkeit eines Fahrpedalwinkels und / oder einer Motordrehzahl und / oder einer Getriebeeingangswellendrehzahl.

Es gibt demzufolge einen definierten Übergang zwischen den Fahrzuständen "Kriechen" und "Anfahren". Die Auswahl und Kombination geeigneter Kriterien für diesen Übergang ist schwierig. Eine Verwendung ungünstiger Kriterien kann zu einem Fehlverhalten des Kraftfahrzeuges führen. Beispielsweise kann es vorkommen, daß das Kraftfahrzeug zunächst bei aktiviertem Kriechregler mit der Kupplung an einer Steigung gehalten wird, daß dann, ausgelöst durch eine Betätigung des Fahrpedales, der Anfahrregler aktiviert wird und dieser ein Anfahrmoment liefert, das kleiner als das zuvor eingestellte Kriechmoment ist. Demzufolge rollt das Kraftfahrzeug in dieser Phase in die falsche Richtung, was von dem Fahrer nicht erwartet wird und von diesem eine schnelle und der Situation angepaßte Gegenreaktion erfordert.

In der DE 198 05 458 A1 wird ein Verfahren zur Anfahrregelung eines Kraftfahrzeuges mit einer elektronisch gesteuerten Anfahrkupplung und einem CVT-Getriebe vorgestellt. Das Verfahren sieht vor, daß ein Kupplungsmoment derart geregelt wird, daß abhängig von einer von einem Fahrer gewünschten Anfahrdynamik eine individuelle Getriebeantriebsdrehzahl bestimmt wird, bei der die Kupplungssteuerung durch die Anfahrregelung beendet wird, d.h. die Anfahrkupplung wird derart gesteuert, daß sie mit Erreichen der betreffenden Getriebeantriebsdrehzahl vollständig geschlossen ist. Die Anfahrt ist dann beendet, und eine weitere Beschleunigung des Kraftfahrzeuges kann nur noch über eine Vergrößerung des Übersetzungsverhältnisses des CVT-Getriebes und / oder durch eine Steigerung der Drehzahl eines zugeordneten Antriebsmotors erfolgen. Durch das Verfahren wird ein harmonischer Übergang von der Anfahrt in den normalen Fahrbetrieb erreicht. Ein Übergang von einem Kriechen in die Anfahrt ist dagegen nicht vorgesehen, und die Vermeidung eines Zurückrollens bei der Anfahrt ist durch das Verfahren nicht vermeidbar.

Aus der DE 197 33 465 A1 ist eine Anordnung und ein Verfahren zur Steuerung einer automatisierten Kupplung eines Kraftfahrzeuges bei kleinen Fahrzeuggeschwindigkeiten bekannt. Es sind Mittel zum Erfassen einer Betätigung eines Bremspedales, eines Rückwärtsrollens, und eines Vorwärtsrollens vorgesehen, durch die entsprechende Ausgangssignale erzeugbar sind. Desweiteren ist eine Entscheidungseinrichtung zur Auswertung der Ausgangssignale und zur Erkennung eines momentanen Fahrzustandes vorgesehen, die mit der Kupplung in Verbindung steht. Die Kupplung ist durch die Entscheidungseinrichtung entsprechend dem festgestellten Fahrzustand steuerbar. In dem zugehörigen Verfahren wird zwischen den Zuständen "Bremsbetätigung", "Normal_Zug" und "Falsche_Richtung" unterschieden. Nachteilig dabei ist, daß ein Zurückrollen, d.h. der Zustand "Falsche_Richtung" erst erkennbar ist, wenn eine meßbare Geschwindigkeit in die falsche Richtung vorliegt. Somit kann dem Zurückrollen nur mit einer gewissen Verzögerung entgegengewirkt werden, wobei fraglich ist, ob das anfänglich eingestellte Anfahrmoment ausreichend groß ist, um das Zurückrollen schnell zu beenden.

Es ergibt sich daher das Problem, ein Verfahren und eine Vorrichtung zur Steuerung einer automatisierten Kupplung bei niedrigen Fahrgeschwindigkeiten bereitzustellen, durch die eine zuverlässige Vermeidung eines Zurückrollens und ein harmonischer Übergang von dem Zustand "Kriechen" in den Zustand "Anfahren" gewährleistet wird.

Das Problem wird erfindungsgemäß in Verbindung mit dem Oberbegriff von Anspruch 1 dadurch gelöst, daß bei einem Anfahrvorgang unabhängig voneinander ein Kriechmoment und ein Anfahrmoment ermittelt wird, und daß dann ein Kupplungssollmoment als Funktion des Kriechmomentes und des Anfahrmomentes bestimmt und an der Kupplung eingestellt wird.

Dadurch, daß bei einem Anfahrvorgang, der üblicherweise durch eine Betätigung eines Fahrpedales eingeleitet wird, neben dem Anfahrmoment weiterhin das Kriechmoment ermittelt wird und beide Momente als Parameter in die Bestimmung des Kupplungssollmomentes eingehen, ist sowohl ein ungewolltes Zurückrollen vermeidbar als auch ein harmonischer Anfahrvorgang steuerbar. Dagegen wird nach dem Stand der Technik in Abhängigkeit ein oder mehrerer Parameter abrupt von dem Kriechmoment auf das Anfahrmoment umgeschaltet, wobei der zuvor eingestellte Wert des Kriechmomentes keine Berücksichtigung mehr findet.

Als einfachste Funktion kann das Kupplungssollmoment als Maximalwert aus dem Kriechmoment und dem Anfahrmoment bestimmt werden, wodurch ein Zurückrollen, sofern es nicht schon beim Kriechen vorgelegen hat, zuverlässig vermieden wird.

Das Problem wird weiterhin in Verbindung mit dem Oberbegriff von Anspruch 2 dadurch gelöst, daß bei einem Anfahrvorgang ein Kriechmoment ermittelt wird, und daß dann ein Anfahrmoment als Funktion des Kriechmomentes bestimmt und an der Kupplung eingestellt wird.

Die Wirkung ist dieselbe wie in dem zuvor beschriebenen Verfahren, d.h. ein Zurückrollen ist vermeidbar, da das Anfahrmoment unter Berücksichtigung des zuvor eingestellten Kriechmomentes erfolgt.

In einer einfachen Funktion kann das Anfahrmoment dabei mindestens gleich groß wie das Kriechmoment bestimmt werden. Dadurch wird ein Zurückrollen zuverlässig vermieden, sofern es nicht schon beim Kriechen vorgelegen hat.

Dabei ist es bei Anwendung beider Verfahren vorteilhaft, wenn die Ermittlung des Kriechmomentes und des Anfahrmomentes weitgehend zeitgleich durchgeführt wird, da somit auf aktuelle Änderungen von fahrzeugspezifischen Betriebsparametern und Fahrparametern, wie z.B. einer Änderung der Fahrbahnneigung, reagiert werden kann. Dabei kann durchaus ein anderes Kriechmoment als das zuvor eingestellte ermittelt werden, auch wenn momentan kein Kriechen mehr vorliegt. Dieses Kriechmoment würde bei einem seitens des Fahrers gewünschten Fahrzeugstillstand das Kraftfahrzeug an der aktuellen Stelle mit der entsprechenden Neigung bzw. Steigung mindestens halten.

Zur Aktualisierung der Werte für das Kriech- und das Anfahrmoment ist es zweckmäßig, den Verfahrensablauf in regelmäßigen oder unregelmäßigen Zeitabständen zu wiederholen. Dabei können bei Verwendung unregelmäßiger Zeitabstände diese lastabhängig bestimmt werden, wobei die Zeitabstände dann vorteilhaft mit zunehmender Last kürzer festgelegt werden. Bei einem Anfahrvorgang ist mit zunehmender Belastung des Antriebsmotors von einer schnelleren Änderung von Fahrparametern, z.B. einer Änderung der Fahrbahnneigung, auszugehen, so daß in diesem Fall durch eine Verringerung der Zeitabstände zur Bestimmung des Kriech- und des Anfahrmomentes entsprechend schneller reagiert werden kann.

Das die Vorrichtung betreffende Problem wird erfindungsgemäß in Verbindung mit dem Oberbegriff von Anspruch 8 dadurch gelöst, daß ein Kriechregler zur Ermittlung eines Kriechmomentes und ein Anfahrregler zur Ermittlung eines Anfahrmomentes vorhanden sind, und daß eine mit dem Kriechregler und dem Anfahrregler in Verbindung stehende Auswerteeinheit zur Bestimmung eines Kupplungssollmomentes als Funktion des Kriechmomentes und des Anfahrmomentes vorgesehen ist.

Dadurch, daß sowohl das Kriechmoment als auch das Anfahrmoment zur Verfügung stehen, kann das Kupplungssollmoment in der Auswerteeinheit derart bestimmt werden, daß bei einem Anfahrvorgang ein Zurückrollen zuverlässig verhinderbar ist.

Dabei kann die Auswerteeinheit im einfachsten Fall als Vergleichseinheit zur Bestimmung eines Maximalwertes aus dem Kriech- und dem Anfahrmoment ausgebildet sein.

Das die Vorrichtung betreffende Problem wird weiterhin in Verbindung mit dem Oberbegriff von Anspruch 9 dadurch gelöst, daß ein Kriechregler zur Ermittlung eines Kriechmomentes vorhanden ist, und daß ein mit dem Kriechregler in Verbindung stehender Anfahrregler zur Bestimmung eines Anfahrmomentes als Funktion des Kriechmomentes vorgesehen ist.

In diesem Fall ist bei einem Anfahrvorgang ein ungewolltes Zurückrollen des betreffenden Kraftfahrzeuges dadurch verhinderbar, daß das Anfahrmoment unter Berücksichtigung des zuvor ermittelten Kriechmomentes erfolgt, z.B. indem das Anfahrmoment mindestens gleich groß wie das Kriechmoment festgelegt wird. Zur vorgenannten Vorrichtung ergibt sich aufgrund der Einsparung einer Auswerteeinheit ein einfacherer und kostengünstigerer Aufbau.

Weitere Einzelheiten der Erfindung ergeben sich aus der nachfolgenden ausführlichen Beschreibung und den beigefügten Zeichnungen, in denen bevorzugte Ausführungsformen der Erfindung beispielsweise veranschaulicht sind.

In den Zeichnungen zeigen:
- Figur 1:: Ein Funktionsschema gemäß dem Verfahren nach Anspruch 1 und der Vorrichtung nach Anspruch 8, und
- Figur 2:: ein Funktionsschema gemäß dem Verfahren nach Anspruch 2 und der Vorrichtung nach Anspruch 9.

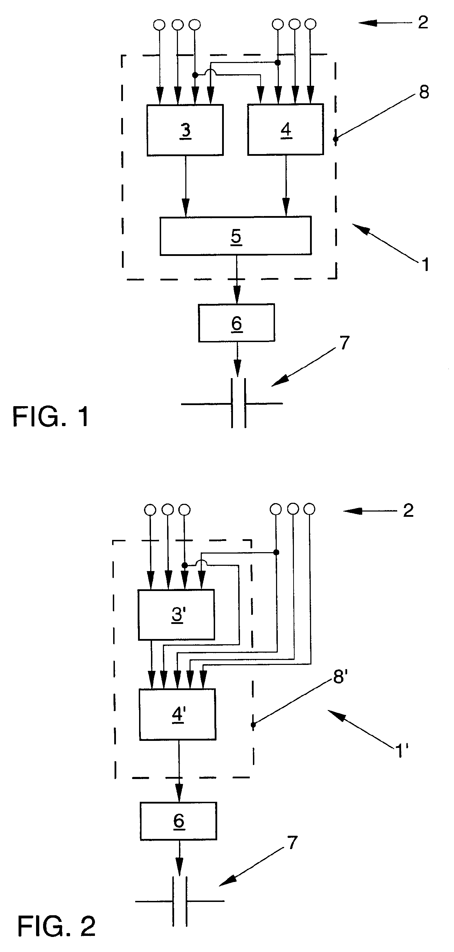

In der Figur 1 ist eine erste Variante des erfindungsgemäßen Verfahrens und der entsprechenden Vorrichtung anhand eines Funktionsschemas 1 dargestellt. Bei einem Anfahrvorgang werden Betriebs- und Fahrparameter eines betreffenden Kraftfahrzeuges von Sensoren 2 ermittelt und entsprechende Signale einem Kriechregler 3 und einem Anfahrregler 4 zugeleitet. Unabhängig voneinander und weitgehend zeitgleich werden in dem Kriechregler 3 ein Kriechmoment und in dem Anfahrregler ein Anfahrmoment bestimmt, wobei bestimmte Signale in beiden Reglern 3, 4, andere dagegen in nur einem Regler verarbeitet werden. Die Werte des Kriechmomentes und des Anfahrmomentes werden dann einer Auswerteeinheit 5 zugeleitet, in der als Funktion bzw. in Abhängigkeit beider Werte ein Kupplungssollmoment bestimmt und einem Stellantrieb 6 zugeleitet wird, durch den das Kupplungssollmoment an einer zugeordneten Kupplung 7 eingestellt wird. Dabei kann in einer einfachen Ausführung die Auswerteeinheit 5 als Vergleichseinheit ausgebildet sein, durch die ein Maximalwert aus dem Kriechmoment und dem Anfahrmoment ermittelt und als Kupplungssollmoment an den Stellantrieb weitergeleitet wird. Durch ein derartiges Verfahren bzw. eine derartige Vorrichtung kann ein Anfahrvorgang harmonisch gesteuert werden und ein ungewolltes Zurückrollen zuverlässig verhindert werden. Der Kriechregler 3, der Anfahrregler 4 und die Auswerteeinheit 5 müssen nicht notwendigerweise separate Baueinheiten darstellen, sondern die entsprechenden Funktionen können auch innerhalb eines einzigen Steuergerätes 8 realisiert sein, z.B. als Softwareprogramme innerhalb eines elektronischen Steuerungsrechners. Entscheidend ist im wesentlichen die unabhängige Bestimmung des Kriechmomentes und des Anfahrmomentes und die Bestimmung des Kupplungssollmomentes als Funktion aus beiden Momenten.

In der Figur 2 ist eine zweite Variante des erfindungsgemäßen Verfahrens und der entsprechenden Vorrichtung anhand eines Funktionsschemas 1' dargestellt. Hier werden bei einem Anfahrvorgang ebenfalls Betriebs- und Fahrparameter des betreffenden Kraftfahrzeuges von Sensoren 2 ermittelt und entsprechende Signale teilweise einem Kriechregler 3' zugeleitet. In diesem erfolgt die Ermittlung eines Kriechmomentes, dessen Wert zusammen mit anderen von den Sensoren 2 stammenden Signalen einem Anfahrregler 4' zugeleitet wird. Durch den Kriechregler erfolgt die Bestimmung eines Anfahrmomentes unter Berücksichtigung des zuvor ermittelten Kriechmomentes. Im einfachsten Fall wird das Anfahrmoment derart bestimmt, daß es mindestens so groß wie das Kriechmoment ist. Der Wert des derart ermittelten Anfahrmomentes wird unmittelbar dem Stellantrieb 6 zugeleitet und von diesem an der zugeordneten Kupplung 7 eingestellt. Im vorliegenden Fall ergibt sich eine Vereinfachung durch den Wegfall einer Auswerteeinheit bzw. des entsprechenden Verarbeitungsschrittes in einem Softwareprogramm. Auch hier können die entsprechenden Funktionen des Kriechreglers 3' und des Anfahrreglers 4' innerhalb eines einzigen Steuergerätes 8' bzw. als Softwareprogramme innerhalb eines elektronischen Steuerungsrechners realisiert sein, wobei nunmehr die Bestimmung des Anfahrmomentes als Funktion des Kriechmomentes wesentlich ist. Auch durch das vorliegende Verfahren bzw. die entsprechende Vorrichtung zur Steuerung einer automatisierten Kupplung 7 ist ein Anfahrvorgang harmonisch steuerbar und ein ungewolltes Zurückrollen zuverlässig verhinderbar.

### BEZUGSZEICHENLISTE

- 1: Funktionsschema
- 1': Funktionsschema
- 2: Sensor
- 3: Kriechregler
- 3': Kriechregler
- 4: Anfahrregler
- 4': Anfahrregler
- 5: Auswerteeinheit
- 6: Stellantrieb
- 7: Kupplung
- 8: Steuergerät
- 8': Steuergerät

## Patentansprüche

1. Verfahren zur Steuerung einer automatisierten Kupplung, insbesondere eines Kraftfahrzeuges, bei niedrigen Fahrgeschwindigkeiten, **dadurch gekennzeichnet,** daß bei einem Anfahrvorgang unabhängig voneinander ein Kriechmoment und ein Anfahrmoment ermittelt wird, und daß dann ein Kupplungssollmoment als Funktion des Kriechmomentes und des Anfahrmomentes bestimmt und an der Kupplung (7) eingestellt wird.

2. Verfahren zur Steuerung einer automatisierten Kupplung, insbesondere eines Kraftfahrzeuges, bei niedrigen Fahrgeschwindigkeiten, **dadurch gekennzeichnet,** daß bei einem Anfahrvorgang weiterhin ein Kriechmoment ermittelt wird, und daß dann ein Anfahrmoment als Funktion des Kriechmomentes bestimmt und an der Kupplung (7) eingestellt wird.

3. Verfahren nach Anspruch 1 oder 2, **dadurch gekennzeichnet,** daß die Ermittlung des Kriechmomentes und des Anfahrmomentes weitgehend zeitgleich durchgeführt wird.

4. Verfahren nach Anspruch 1 oder 3, **dadurch gekennzeichnet,** daß das Kupplungssollmoment als Maximalwert aus dem Kriechmoment und dem Anfahrmoment bestimmt wird.

5. Verfahren nach Anspruch 2 oder 3, **dadurch gekennzeichnet,** daß das Anfahrmoment mindestens gleich groß wie das Kriechmoment bestimmt wird.

6. Verfahren nach einem der Ansprüche 1 bis 5, **dadurch gekennzeichnet,** daß der Verfahrensablauf in regelmäßigen oder unregelmäßigen Zeitabständen wiederholt wird.

7. Verfahren nach Anspruch 6, **dadurch gekennzeichnet,** daß die unregelmäßigen Zeitabstände lastabhängig bestimmt werden, und daß die Zeitabstände mit zunehmender Last kürzer festgelegt werden.

8. Vorrichtung zur Steuerung einer automatisierten Kupplung bei niedrigen Fahrgeschwindigkeiten nach einem der Ansprüche 1, 3, 4, 6 oder 7, **dadurch gekennzeichnet,** daß ein Kriechregler (3) zur Ermittlung eines Kriechmomentes und ein Anfahrregler (8) zur Ermittlung eines Anfahrmomentes vorhanden sind, und daß eine mit dem Kriechregler (3) und dem Anfahrregler (4) in Verbindung stehende Auswerteeinheit (5) zur Bestimmung eines Kupplungssollmomentes als Funktion des Kriechmomentes und des Anfahrmomentes vorgesehen ist.

9. Vorrichtung zur Steuerung einer automatisierten Kupplung bei niedrigen Fahrgeschwindigkeiten nach einem der Ansprüche 2, 3, 5, 6 oder 7, **dadurch gekennzeichnet,** daß ein Kriechregler (3') zur Ermittlung eines Kriechmomentes vorhanden ist, und daß ein mit dem Kriechregler (3') in Verbindung stehender Anfahrregler (4') zur Bestimmung eines Anfahrmomentes als Funktion des Kriechmomentes vorgesehen ist.

10. Vorrichtung nach Anspruch 8, **dadurch gekennzeichnet,** daß die Auswerteeinheit (5) als Vergleichseinheit zur Bestimmung eines Maximalwertes ausgebildet ist.
